# EUROPEAN PATENT SPECIFICATION

(11) **EP 1 793 070 B1**
(45) Date of publication and mention of the grant of the patent: **22.02.2017**
(21) Application number: 06024535.4
(22) Date of filing: 27.11.2006
(51) Int. Cl.: E05B 81/06, E05B 81/16, E05B 83/40, E05B 77/26, E05B 77/32

(54) **Operating device of a door latch in a vehicle**
Betätigungsvorrichtung für eine Fahrzeugstürverriegelung
Dispositif d'actionnement d'une serrure de porte d'un véhicule

(30) Priority: 30.11.2005 JP 2005346795
(43) Date of publication of application: 06.06.2007
(73) Proprietor: Mitsui Kinzoku ACT Corporation, Naka-ku Yokohama-shi Kanagawa (JP)
(72) Inventor: Hiramoto, Shigenori Mitsui Mining & Smelting Co., Okusamachi Nirasaki-shi Yamanashi-ken (JP)
(74) Representative: Friese Goeden Patentanwälte PartGmbB

(56) References cited:
- EP-A1- 1 084 918
- EP-A1- 1 433 911
- DE-A1- 10 323 888
- FR-A1- 2 794 791
- FR-A1- 2 852 993
- JP-A- 2002 030 843

## Description

The present invention relates to an operating device of a door latch in a vehicle, the operating device being of the kind defined in the preamble of claim 1. Such an operatfing device is used for operating a door latch mechanism of a vehicle door which may be a sliding door.

An operating device of the kind referred to is disclosed in JP2002-30843A. Such an operating device comprises an outside handle on a sliding door, a handle lever released by door opening means such as an inside handle, a release lever connected to a door latch mechanism; a locking lever movable between an unlocking position and a locking position based on power source such as an actuator and a locking knob; and a cooperating member which moves with the locking lever between the unlocking and locking positions to allow releasing of the handle lever to be transmitted to the door latch mechanism in the unlocking position and to make it impossible to be transmitted in the locking position.

However, in the operating device of a door latch for a vehicle in JP2002-30843A, when the locking lever and cooperating member are in the locking position, if the door-opening means is operated together with the power source, the locking lever and cooperating member are still in the locking position to involve malfunction though the power source is actuated for unlocking. This is because the handle lever is released by the door-opening means when the cooperating member is in the locking position to allow the cooperating member to move and engage in a cam hole to stop movement from the locking position to the unlocking position. Thus, it malfunction occurs, the locking lever is still in the locking position even if the door-opening means returns to a position before operation, causing necessity of operation of the power source again to lead troublesome operation.

EP 1 433 911 A1 discloses a vehicle door latch which has a forkbolt, a detent, a release mechanism and a lock mechanism. The detent is moved by an intermittent lever. A lock lever moves the intermittent lever back and forth between an unlock position where the intermittent lever drives the detent to release the forkbolt and a lock position where the intermittent lever free wheels with respect to the detent. The lock lever is a composite lock lever including a lower lock lever, an upper lock lever and a spring that stores energy when the lower lock lever pivots with respect to the upper lock lever. The composite lock lever provides an anti-jamming feature that allows premature actuation of an inside release lever or an outside release lever and a subsequent unlocking operation while either the inside release lever or the outside release lever is held in a release or unlatching position. The known vehicle door latch may also include a power lock assembly.

DE 103 23 888 A1 discloses a door lock device including a latch mechanism, a lift lever, an open lever, and a lock lever. The lock lever includes a main lever and a sub lever mounted on the main lever so as to relatively rotate thereto. A spring is disposed between the main lever and the sub lever. If the outside handle and a locking actuation are operated substantially at the same time in the locked state of the vehicle door, the vehicle door is switched to the unlocked state when the outside handle is returned to the normal position. The vehicle door does not require to be switched to the unlocked state again and thus the bother of operation can be reduced.

An object of the invention is to provide an operating device of the kind referred to, which operating device is designed so as to avoid malfunction when a door-opening means is operated together with a power source.

According to the invention, the operating device of the kind referred to is characterized in that the locking lever comprises a first lever portion and a second lever portion, the first lever portion engaging with the engagement pin at a first end and being connected to the second pivot at a second end, the second lever portion being connected to the second pivot at a first end and to the actuator at a second end; the operating device further comprises a third spring which is wound on the second pivot; and the operating device further comprises a turnover spring for holding the second lever portion of the locking lever in a locking or unlocking position, the third spring forcing the first lever portion toward the second lever portion in an unlocking direction by force less than force of the turnover spring, wherein the engagement pin moves in the horizontal hole portion of the cam hole to prevent the release lever from releasing the engagement of the latch to the striker even if the handle lever is actuated for releasing when the first and second lever portions are in a locking position and when the engagement pin is at the upper end of the vertical hole portion of the cam hole, wherein, when the actuator is actuated for unlocking, the engagement pin engages with a lower edge of the horizontal hole portion of the cam hole to hold the engagement pin and the first lever portion in the locking position and to allow the second lever portion to move from the locking position to the unlocking position against force of the third spring, so that the handle lever returns to a position before releasing to allow the engagement pin to relatively move to the upper end of vertical hole portion thereby enabling the engagement pin to move to the lower end of the vertical hole portion to enable the latch to disengage from the striker by the release lever.

### BRIEF DESCRIPTION OF THE DRAWINGS

The features and advantages of the invention will become more apparent from the following description with respect to embodiments as shown in accompanying drawings wherein:

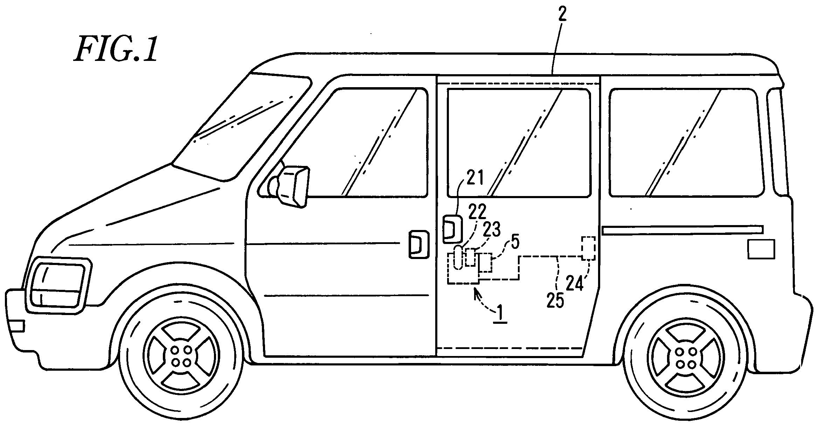

Fig. 1 is a side elevational view of a vehicle having a sliding door to which the present invention is applied;
Fig. 2 is a side elevational view of an operating device according to the present invention;
Fig. 3 is an exploded perspective view of the main part of the invention;
Fig. 4 is a vertical sectional view taken along the line IV-IV in Fig. 2;
Fig. 5 is a side elevational view of the main part where a handle lever is moved in an unlocking position;
Fig. 6 is a side elevational view of the main part in the locking position;
Fig. 7 is a side elevational view of the main part in which the handle lever is moved in the locking position;
Fig. 8 is a side elevational view of the main part in which the handle lever is moved for releasing and a power source is actuated for unlocking; and
Fig. 9 is a side elevational view of the main part in which the second locking lever is movable to an unlocking position.

### DETAILED DESCRIPTION OF PREFERRED EMBODIMENTS

An operating device 1 comprises an outside lever 3 or a handle lever released by an outside handle 21 as door-opening means outside a sliding door 2 on a base plate 9; an inside lever 4 released by an inside handle 22 inside the sliding door 2 on the base plate 9; a motor-type actuator 5 as power source; a locking lever 6 connected to the actuator 5 and a locking knob 23 inside the sliding door 2; a release lever 7 connected via a cable 25 to a door-latch mechanism 24 at the rear part inside the sliding door 2; an engagement pin 12 moving with the locking lever 6; and a child-proof lever 8.

The door-latch mechanism 24 engages with a striker (not shown) fixed to a vehicle body to keep the sliding door 2 in a full-closed position, and disengages from the striker to enable the sliding door 2 to open.

The outside lever 3 is pivotally secured to the base plate 9 on a pivot 10 and has an inverted-L-shaped cam opening 31 comprising a vertical hole portion 31 a and a horizontal hole portion 31 b extending horizontally from the upper end of the vertical hole portion 31a.

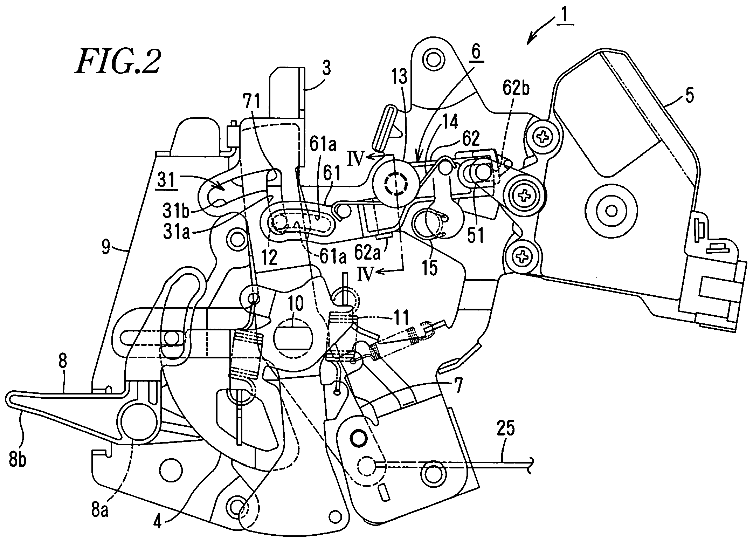

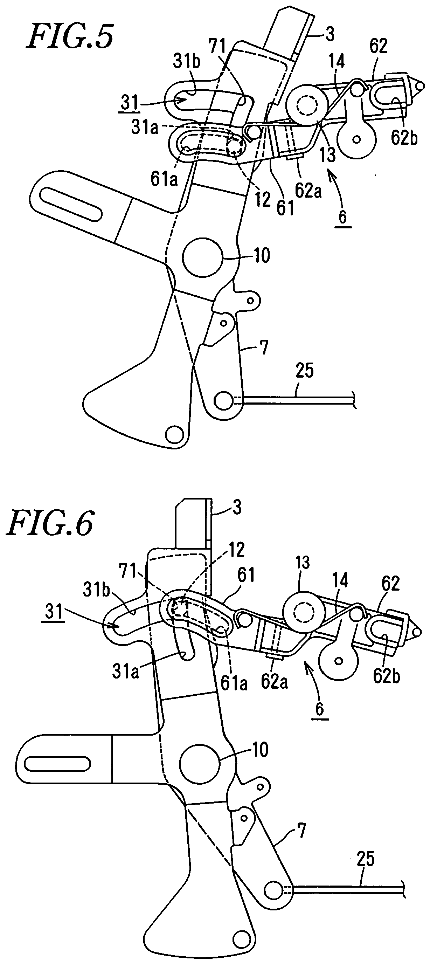

When the outside handle 21 is operated to open the sliding door, the outside lever 3 is moved from a waiting position in Figs. 2, 6 and 9 to a releasing position in Figs. 5, 7 and 8 in a clockwise direction.

The inside lever 4 is pivoted to the base plate 9 to rotate together with the pivot 10 and released with the pivot 10 on the basis of opening operation of the inside handle 22 fixed in the side end in a clockwise direction in Fig. 2.

The child-proof lever 8 is pivotally secured to the base plate 9 on a pivot 8a and has an operating part 8b projecting from the front end of the sliding door 2. The operating part 8b is operated up and down while the sliding door 2 is opened and changes to an unlocking position in Fig. 2 to enable release of the inside lever 4 to be transmitted to the outside lever 3 and to a locking position to make it impossible to be transmitted by rotating in an anticlockwise direction from the unlocking position.

The release lever 7 is pivotally secured to the base plate 9 on the pivot 10 independently from the outside lever 3 and inside lever 4 and has a vertical elongate hole 71 along a cam hole 31 of the outside lever 3. The release lever 7 is moved from the waiting position in Fig. 2 to the release position in Fig. 5, so that the latch mechanism 24 is released by the cable 25 enabling the sliding door 2 to open.

An engagement pin 12 extends transversely of the vehicle and slidably engages in the cam hole 31 of the outside lever 3 and the elongate hole 71 of the release lever 7. By the locking lever 6, the pin 12 moves between an unlocking position in Figs. 2 and 5 where the pin 12 is positioned at the lower end of the engagement hole 31 a of the cam hole 31 and a locking position where the pin 12 is positioned at the upper end. In the unlocking position, releasing of the outside lever 3 can be transmitted to the release lever 7, and in the locking position, releasing of the outside lever 3 cannot be transmitted to the release lever 7.

The actuator 5 is positioned behind the outside lever 3 and release lever 7. In the front of the actuator 5, an output lever 51 is pivotally secured between the unlocking position in Fig. 2 and locking position to which output lever 51 rotates in an anticlockwise direction.

The locking lever 6 is positioned between the outside lever 3 and the output lever 51 of the actuator 5, and comprises a first lever portion 61 engaged with the engagement pin 12 and a second lever portion 62 coupled to the output lever 51 of the actuator 5.

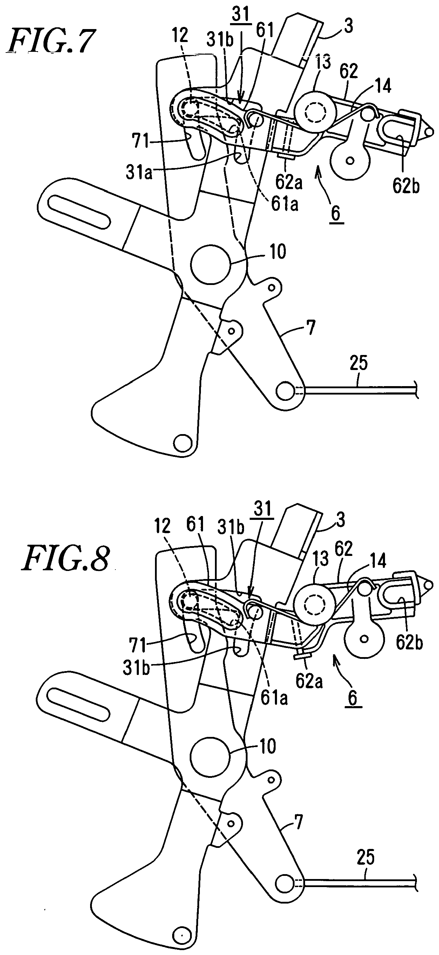

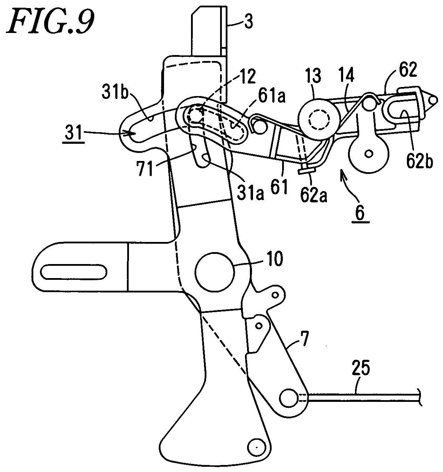

Between the first and second lever portions 61 and 62, the locking lever 6 is pivotally secured to the base plate 9 on a pivot 13. On the pivot 13, a spring 14 is wound. One end of the spring 14 is coupled to the pivot 13 and the other end of the spring 14 is coupled to the second lever portion 62. Thus, the first lever portion 61 is forced against the second lever portion 62 by the spring 14 in an unlocking direction or anticlockwise direction in Fig. 2 and Figs. 5-9. Usually, the first lever portion 61 is kept to allow the lower edge to contact the upper surface of an engagement portion 62a in Fig. 2 and Figs. 5-7 and changed with the second lever portion 62 to the unlocking position in Figs. 2 and 5 and locking position in Figs. 8 and 9.

In the front of the first lever portion 61, a guide groove 61a is formed to extend perpendicular to the cam hole 31 of the outside lever 3 and the elongate hole 71 of the release lever 7. The engagement pin 12 engages in the guide groove 61a slidably.

The first lever portion 61 is moved with the second lever portion 62 from the unlocking position in Fig. 2 to the locking position in Fig. 6 to allow the engagement pin 12 to move from the unlocking position to the locking position and vice versa.

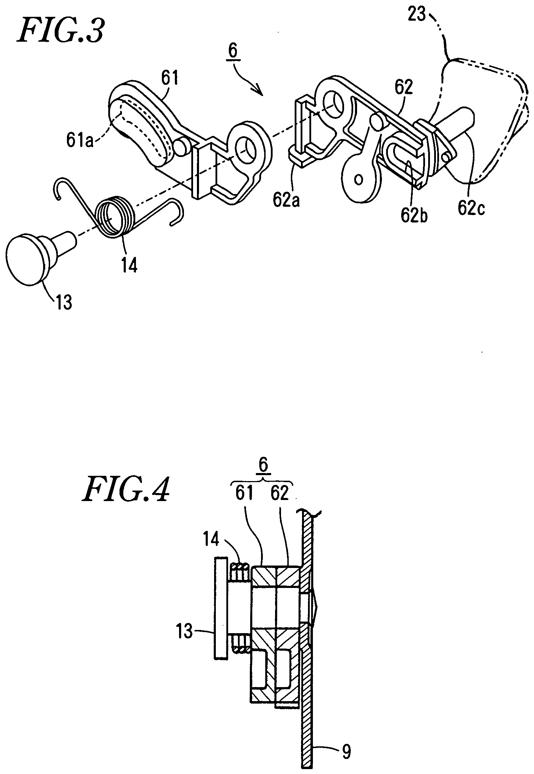

In the second lever portion 62, the output lever 51 of the actuator 5 and locking knob 23 are connected to a connecting groove 62b at the rear end and a connecting rod 62c (in Fig. 3) projecting towards the inside of the vehicle respectively to allow it to move between the unlocking position in Figs. 2, 5, 8 and 9 and locking position in Figs. 6 and 7 based on the operation of the output lever 51 and the locking knob 23.

Between the second lever portion 62 and the base plate 9, a turnover spring 15 is provided to keep the second lever portion 62 in the unlocking and locking positions with biasing force, which is determined to be greater than force of the spring 14 acting between the first and second levers 61 and 62. Thus, in Fig. 9, keeping the second lever portion 62 in the unlocking position, the first lever portion 61 can be surely moved from the locking position to the unlocking position by force of the spring 14.

Operation of the embodiment of the invention will be described below.

As shown in Fig. 2, when the operating device 1 is in the unlocking position in which the first and second lever portions 61, 62 of the locking lever 6 and the engagement pin 12 are in the unlocking position, the outside lever 3 is moved by opening operation of the outside handle 21 or inside handle 22 to allow the engagement pin 12 to engage on the front edge of the vertical hole portion 31a of the cam hole 31 and moves with the outside lever 3. Thus, as shown in Fig 5, the release lever 7 is moved with the outside lever 3 via the engagement pin 12 to release latching of the door-latch mechanism 24 to enable the sliding door 2 to open.

As shown in Fig, 6, when the operating device 1 is in the locking position in which the first and second lever portions 61,62 of the locking lever 6 and the engagement pin 12 are locked, even if the outside lever 3 is moved with opening operation of the outside handle 21 or inside handle 22, the engagement pin 12 slides forwards in the horizontal hole portion 31b of the cam hole 31 to allow release of the outside lever 3 not to be transmitted to the release lever 7, thereby making it impossible to release latching of the door-latch mechanism 24.

In Fig. 7, when the output lever 51 of the actuator 5 is moved for unlocking by an inside switch (not shown) or remote control switch (not shown), the engagement pin 12 engages on the lower edge of the horizontal hole portion 31b to make it impossible to move in an unlocking direction. Thus, while the engagement pin 12 and the first lever portion 61 is kept in the locking position, only the second lever portion 62 moves from the locking position to the unlocking position against force of the spring 14 and kept in the unlocking position by the turnover spring 15.

Thereafter, the outside handle 21 or inside handle 22 returns to a position before opening operation to return the outside lever 3 to the waiting position, and the engagement pin 12 moves to the upper end of the engagement hole portion 31 a of the cam hole 31 as shown in Fig. 9 thereby enabling the engagement pin 12 to move to the unlocking position, so that the first lever portion 61 and engagement pin 12 is moved to the unlocking position by force of the spring 14 as shown in Fig. 2. And the outside handle 21 or inside handle 22 is opened, enabling the door-latch mechanism 24 to be released.

Accordingly, even if the outside handle 21 or inside handle 22 and actuator 5 are operated together, the outside handle 21 or inside handle 22 is returned to a position before operation enabling the locking lever 6 and engagement pin 12 to move to the unlocking position to improve operation capability.

## Claims

1. An operating device (1) of a door latch in a vehicle, comprising:
a base plate (9);
a first pivot (10) on the base plate (9);
a handle lever (3) mounted to the base plate (9) via a first spring (11), said handle lever (3) being pivoted on the first pivot (10) against force of the first spring (11) by door-opening means (21);
a release lever (7) mounted to the base plate (9) via a second spring under the handle lever (3), said release lever (7) being pivoted on the first pivot (10) against force of the second spring with the handle lever (3) in an unlocking position in which the door latch connected to a lower end of the release lever (7) disengages from a striker fixed to the vehicle while the handle lever (3) is only pivoted in a locking position in which the door latch engages with the striker;
an engagement pin (12);
a second pivot (13) on the base plate (9);
an actuator (5); and
a locking lever (6) engaging with the engagement pin (12) and being connected to the second pivot (13) and to the actuator (5),
the handle lever (3) having a cam hole (31) which comprises a vertical hole portion (31a) and a horizontal hole portion (31b), said horizontal hole portion (31b) extending at the upper end of the vertical hole portion (31a); said release lever (7) having an elongate hole (71) over which the vertical hole portion (31a) of the cam hole (31) extends; the locking lever (6) having a horizontal guide groove (61a) in which the engagement pin (12) slides;
**characterized in that** the locking lever (6) comprises a first lever portion (61) and a second lever portion (62), the first lever portion (61) engaging with the engagement pin (12) at a first end and being connected to the second pivot (13) at a second end, the second lever portion (62) being connected to the second pivot (13) at a first end and to the actuator (5) at a second end; the operating device (1) further comprises a third spring (14) which is wound on the second pivot (13); and the operating device further comprises a turnover spring (15) for holding the second lever portion (62) of the locking lever (6) in a locking or unlocking position, the third spring (14) forcing the first lever portion (61) toward the second lever portion (62) in an unlocking direction by force less than force of the turnover spring (15), wherein the engagement pin (12) moves in the horizontal hole portion (31b) of the cam hole (31) to prevent the release lever (7) from releasing the engagement of the latch to the striker even if the handle lever (3) is actuated for releasing when the first and second lever portions (61, 62) are in a locking position and when the engagement pin (12) is at the upper end of the vertical hole portion (31a) of the cam hole, wherein, when the actuator is actuated for unlocking, the engagement pin (12) engages with a lower edge of the horizontal hole portion (31b) of the cam hole (31) to hold the engagement pin (12) and the first lever portion (61) in the locking position and to allow the second lever portion (62) to move from the locking position to the unlocking position against force of the third spring (14), so that the handle lever (3) returns to a position before releasing to allow the engagement pin (12) to relatively move to the upper end of vertical hole portion (31a) thereby enabling the engagement pin (12) to move to the lower end of the vertical hole portion (31a) to enable the latch to disengage from the striker by the release lever (7).

## Patentansprüche

1. Betätigungsvorrichtung (1) für eine Fahrzeugtürverriegelung, umfassend:
eine Grundplatte (9);
einen ersten Zapfen (10) auf der Grundlatte (9);
einen Griffhebel (3), der an der Grundplatte (9) über eine erste Feder (11) angebracht ist, wobei der Griffhebel (3) um den ersten Zapfen (10) gegen die Kraft der ersten Feder (11) durch Türöffnungsmittel (21) verschwenkt wird;
einen Freigabehebel (7), der an der Grundplatte (9) über eine zweite Feder unter dem Griffhebel (3) montiert ist, wobei der Freigabehebel (7) um den ersten Zapfen (10) gegen die Kraft der zweiten Feder mit dem Griffhebel (3) in eine Entriegelungsposition verschwenkt wird, in der sich die Türverriegelung, die mit einem unteren Ende des Freigabehebels (7) verbunden ist, von einem Anschlag löst, der an dem Fahrzeug befestigt ist, während der Griffhebel (3) nur in eine Verriegelungsposition verschwenkt wird, in der die Türverriegelung mit dem Anschlag in Eingriff ist;
einen Eingriffsstift (12),
einen zweiten Zapfen (13) auf der Grundplatte (9);
ein Betätigungsglied (5); und
einen Verriegelungshebel (6), der mit dem Eingriffsstift (12) in Eingriff tritt und mit dem zweiten Zapfen (13) und mit dem Betätigungsglied (5) verbunden ist,
wobei der Griffhebel (3) eine Nockenöffnung (31) aufweist, die einen vertikalen Öffnungsabschnitt (31a) und einen horizontalen Öffnungsabschnitt (31 b) umfasst, wobei sich der horizontale Öffnungsabschnitt (31 b) am oberen Ende des vertikalen Öffnungsabschnitts (31a) erstreckt; wobei der Freigabehebel (7) eine längliche Öffnung (71) aufweist, über der sich der vertikale Öffnungsabschnitt (31a) der Nockenöffnung (31) erstreckt; wobei der Verriegelungshebel (6) eine horizontale Führungsnut (61a) aufweist, in der der Eingriffsstift (12) gleitet;
**dadurch gekennzeichnet, dass** der Verriegelungshebel (6) einen ersten Hebelabschnitt (61) und einen zweiten Hebelabschnitt (62) umfasst, wobei der erste Hebelabschnitt (61) mit dem Eingriffsstift (12) an einem ersten Ende in Eingriff tritt und mit dem zweiten Zapfen (13) an einem zweiten Ende verbunden ist, wobei der zweite Hebelabschnitt (62) mit dem zweiten Zapfen (13) an einem ersten Ende und mit dem Betätigungsglied (5) an einem zweiten Ende verbunden ist; wobei die Betätigungsvorrichtung (1) weiter eine dritte Feder (14) umfasst, die auf den zweiten Zapfen (13) gewickelt ist; und die Betätigungsvorrichtung weiter eine Überkippfeder (15) zum Halten des zweiten Hebelabschnitts (52) des Verriegelungshebels (6) in einer Verriegelungs- oder
Entriegelungsposition umfasst, wobei die dritte Feder (14) den ersten Hebelabschnitt (61) zum zweiten Hebelabschnitt (62) in einer Entriegelungsrichtung mittels einer Kraft drückt, die geringer als die Kraft der Überkippfeder (15) ist, wobei sich der Eingriffsstift (12) im horizontalen Öffnungsabschnitt (31 b) der Nockenöffnung (31) bewegt, um zu verhindern, dass der Freigabehebel (7) den Eingriff der Verriegelung mit dem Anschlag freigibt, selbst wenn der Griffhebel (3) zur Freigabe betätigt wird, wenn sich der erste und zweite Hebelabschnitt (61, 62) in einer Verriegelungsposition befinden und wenn sich der Eingriffsstift (12) am oberen Ende des vertikalen Öffnungsabschnitts (31a) der Nockenöffnung befindet, wobei, wenn das Betätigungsglied zum Entriegeln betätigt wird, der Eingriffsstift (12) mit einem unteren Rand des horizontalen Öffnungsabschnitts (31 b) der Nockenöffnung (31) in Eingriff tritt, um den Eingriffsstift (12) und den ersten Hebelabschnitt (61) in der Verriegelungsposition zu halten und es dem zweiten Hebelabschnitt (62) zu ermöglichen, sich von der Verriegelungsposition in die Entriegelungsposition gegen die Kraft der dritten Feder (14) zu bewegen, so dass der Griffhebel (3) in eine Position vor der Freigabe zurückkehrt, um es dem Eingriffsstift (12) zu ermöglichen, sich relativ zum oberen Ende des vertikalen Öffnungsabschnitts (31a) zu bewegen, wodurch es möglich wird, dass sich der Eingriffsstift (12) zum unteren Ende des vertikalen Öffnungsabschnitts (31a) bewegt, um zu ermöglichen, dass sich die Verriegelung durch den Freigabehebel (7) vom Anschlag löst.

## Revendications

1. Dispositif d'actionnement (1) d'une serrure de porte dans un véhicule, comprenant :
une plaque de base (9) ;
un premier pivot (10) sur la plaque de base (9) ;
une manette-levier (3) montée sur la plaque de base (9) via un premier ressort (11), ladite manette-levier (3) étant pivotée sur le premier pivot (10) à l'encontre de la force du premier ressort (11) par un moyen d'ouverture de porte (21) ;
un levier de libération (7) monté sur la plaque de base (9) via un second ressort sous la manette-levier (3), ledit levier de libération (7) étant pivoté sur le premier pivot (10) à l'encontre de la force du second ressort avec la manette-levier (3) dans une position de déblocage dans laquelle la serrure de porte connectée à une extrémité inférieure du levier de libération (7) se dégage d'une gâche fixée sur le véhicule alors que la manette-levier (3) est uniquement pivotée dans une position de blocage dans laquelle la serrure de porte est engagée avec la gâche ;
une tige d'engagement (12) ;
un second pivot (13) sur la plaque de base (9) ;
un actionneur (5) ; et
un levier de blocage (6) en engagement avec la tige d'engagement (12) et connectée au second pivot (13) et à l'actionneur (5) ;
la manette-levier (3) ayant un trou à came (31) qui comprend une portion de trou verticale (31a) et une portion de trou horizontale (31b), ladite portion de trou horizontale (31b) s'étendant à l'extrémité supérieure de la portion de trou verticale (31a) ; ledit levier de libération (7) ayant un trou allongé (71) par-dessus lequel s'étend la portion de trou verticale (31a) du trou à came (31) ; le levier de blocage (6) ayant une gorge de guidage horizontale (61a) dans laquelle coulisse la tige d'engagement (12) ;
**caractérisé en ce que** le levier de blocage (6) comprend une première portion de levier (61) et une seconde portion de levier (62),
la première portion de levier (61) étant en engagement avec la tige d'engagement (12) à une première extrémité et étant connectée au second pivot (13) à une seconde extrémité, la seconde portion de levier (62) étant connectée au second pivot (13) à une première extrémité et à l'actionneur (5) à une seconde extrémité ; le dispositif d'actionnement (1) comprend en outre un troisième ressort (14) qui est enroulé sur le second pivot (13) ; et le dispositif d'actionnement comprend en outre un ressort à retournement (15) pour tenir la seconde portion de levier (62) du levier de blocage (6) dans une portion de blocage ou une position de déblocage, le troisième ressort (14) forçant la première portion de levier (61) vers la seconde portion de levier (62) dans une direction de déblocage par une force inférieure à la force du ressort à retournement (15), dans lequel la tige d'engagement (12) se déplace dans la portion de trou horizontale (31b) du trou à came (31) pour empêcher que le levier de libération (7) libère l'engagement de la serrure sur la gâche même si la manette-levier (3) est actionnée pour la libération quand la première et la seconde portion de levier (61, 62) sont dans une position de blocage et quand la tige d'engagement (12) est à l'extrémité supérieure de la portion de trou verticale (31a) du trou à came, dans lequel, quand l'actionneur est actionné pour le déblocage, la tige d'engagement (12) s'engage avec un bord inférieur de la portion de trou horizontale (31b) du trou à came (31) pour tenir la tige d'engagement (12) et la première portion de levier (61) dans la position de blocage, et pour permettre à la seconde portion de levier (62) de se déplacer depuis la position de blocage vers la position de déblocage à l'encontre de la force du troisième ressort (14), de sorte que la manette-levier (3) retourne à une position avant la libération pour permettre à la tige d'engagement (12) de se déplacer relativement à l'extrémité supérieure de la portion de trou verticale (31a), permettant ainsi à la tige d'engagement (12) de se déplacer à l'extrémité inférieure de la portion de trou verticale (31a) pour permettre à la serrure de se dégager vis-à-vis de la gâche par le levier de libération (7).
